# EUROPEAN PATENT SPECIFICATION

(11) **EP 2 269 797 B1**
(45) Date of publication and mention of the grant of the patent: **06.11.2013**
(21) Application number: 10158203.9
(22) Date of filing: 29.03.2010
(51) Int. Cl.: B29C 45/16, B60Q 3/00, B29C 45/14, B29C 45/27

(54) **Selectively Illuminated Trim Panels**
Selektiv beleuchtete Verkleidungen
Panneaux de garniture sélectivement éclairés

(30) Priority: 02.07.2009 US 497445
(43) Date of publication of application: 05.01.2011
(73) Proprietor: International Automotive Components Group North America, Inc., Southfield MI 48034 (US)
(72) Inventor: Hayes, Marc A., Plymouth, MI 48170 (US); Childers, Lee, Brighton, MI 48114 (US)
(74) Representative: Liesegang, Eva

(56) References cited:
- DE-A1-102004 044 035
- DE-A1-102006 016 068
- DE-A1-102007 041 678
- FR-A1- 2 920 717

## Description

### FIELD

The present disclosure relates to trim panels and appliqués used in the transportation industry and, more particularly, to the selective illumination of all or a portion of the front surface of such trim panel or appliqué by backlighting or edge-lighting.

### BACKGROUND

Transportation vehicles, particularly automobiles, may be marketed and sold on the basis of differentiation over other competitive models. Differentiation may be by style or color, and is often accomplished by using trim panels or appliqués on the interior or exterior of the vehicle which denote different levels of luxury, price or value. These appliqués or panels may also form protective coverings for areas that protrude from adjacent surfaces. These panels are generally color-coordinated with the adjacent surfaces of the vehicle but may also be bright, reflective, wood-grained, marbleized or metallized in appearance.

Originally, "real" wood appliqués and finished metal panels were used, however, their popularity suffered due to their high cost and limited durability. Subsequently, wood veneers and films with vacuum-deposited metal layers found favor, however, these solutions did not produce the look of luxury or the extended durability required in today's market.

Various proposals have been suggested and practiced for the manufacture of plastic composites for use as automotive interior trim and exterior trim panels or appliqués.

Attention is directed particularly to United States Application No. 11/428,107 filed June 30, 2006, which is a continuation of International Application No. PCT/US2005/000170 filed January 3, 2005 and published August 4, 2005 as International Publication No. WO 2005/070647, designating the United States, and to United States Application No. 11/532,825 filed September 18, 2006, which is a continuation-in-part of United States Application No. 11/428,107, which are commonly assigned to the assignee of the present disclosure. These applications disclose methods of providing trim panels or appliqués having a wide variety of decorative patterns covered by an outer layer of injection molded, preferably transparent, plastic which provides an exceptional depth of image and luxurious appearance.

These applications further relate to a production method for providing a trim panel or appliqué wherein a decorative layer is positioned between two mold halves and a plastic material is injection molded against one surface of the decorative layer to form a decorative composite Subsequently, the decorative composite is transferred to a second tool where a, preferably transparent, plastic material is injection molded against the front side of the decorative layer. The plastic materials may be of the same or different composition, but preferably one of the materials is a relatively transparent plastic which when provided at an appropriate thickness, yields an appearance of the decorative layer lying under the top surface of the transparent layer, thus having an exceptional depth of image. The decorative layer may comprise a wide variety of thin materials to distinguish its appearance, including, but not limited to; fabric, wood, foil, metal, paper and plastic.

Attention is further directed to United States Application No. 12/352,487 filed January 12, 2009, which is a continuation-in-part of United States Application No. 11/532,825, which are commonly assigned to the assignee of the present disclosure. This application discloses a production method for providing a trim panel or appliqué wherein multiple decorative layers may be backed by or separated by layers of transparent and/or colored/opaque plastic by sequentially injecting multiple shots of plastic using multiple tools to provide a trim product or appliqué wherein the decorative layer(s) appear to be floating in the laminated construction.

There are a myriad of locations within a motor vehicle or other transportation means where lighting is desired to provide ambient lighting for aesthetics and effect, orientation lighting for safety and convenience and functional lighting for reading, etc. The integration of electronics into lighting devices in the automobile and, more particularly, lighting has become a selling feature and further enhances the ambiance of the interior environment associated with traveling.

It is contemplated that lighting may be integrated into trim panels and appliqués through backlighting or edge-lighting of the panels to provide even further differentiation and value. Document DE-A1-102004044035 discloses an appliqué or trim panel in accordance with the preamble of claim 1.

### SUMMARY

The present invention relates to an appliqué or trim panel according to claim 1 and to a method of producing an appliqué or trim panel according to claim 13. Preferred embodiments of the invention are defined in the dependent claims.

### BRIEF DESCRIPTION OF THE DRAWINGS

The features, operation and advantages of the invention may be better understood from the following detailed description of the preferred embodiments taken in conjunction with the attached drawings, in which
**FIG. 1** is a schematic view of a portion of the interior of a motor vehicle illustrating some of the many potential applications for lighted trim panels and appliqués.
**FIG. 2A** is a plan view of an exemplary appliqué with a lighted periphery, according to the present disclosure.
**FIG. 2B** is a plan view of an exemplary appliqué with a lighted logo, according to the present disclosure.
**FIG. 3** is an enlarged cross-sectional view of a portion of an exemplary appliqué or trim panel, according to the present disclosure.
**FIGS. 4-8** are enlarged cross-sectional views of portions of exemplary appliqués or trim panels utilizing multiple decorative layers and transparent and transparent/opaque injection molded layers.
**FIG. 9** is a cross-section of a perspective view of an appliqué or trim panel according to another embodiment of the present disclosure, illustrating an integral light pipe.
**FIG. 9A** is a partial cross-sectional view of the appliqué of **FIG. 9** showing a trim panel to cover the runner/light pipe.
**FIG. 10** is a cross-section of a perspective view of the appliqué or trim panel of **FIG. 9****,** illustrating a different location for the integrated light pipe.
**FIG. 11** is a cross-section of a perspective view of an appliqué or trim panel of **FIG. 9****,** illustrating an integral light pipe which may form a portion of the visible surface of the appliqué or trim panel.
**FIG. 12** is a backside view of the appliqué or trim panel of **FIG. 10** illustrating the integration of a light source.
**FIG. 13** is a cross-sectional view through the center of the appliqué of **FIG. 2B** illustrating an integration of a light source that may backlight the center of an appliqué.
**FIG. 14** is a cross-sectional view through the appliqué of **FIG. 2A** illustrating an integration of a light source that may backlight the periphery of an appliqué.
**FIG. 15** is another cross-sectional view through the appliqué of **FIG. 2A** illustrating an integration of another light source that may backlight the periphery of an appliqué.

### DETAILED DESCRIPTION

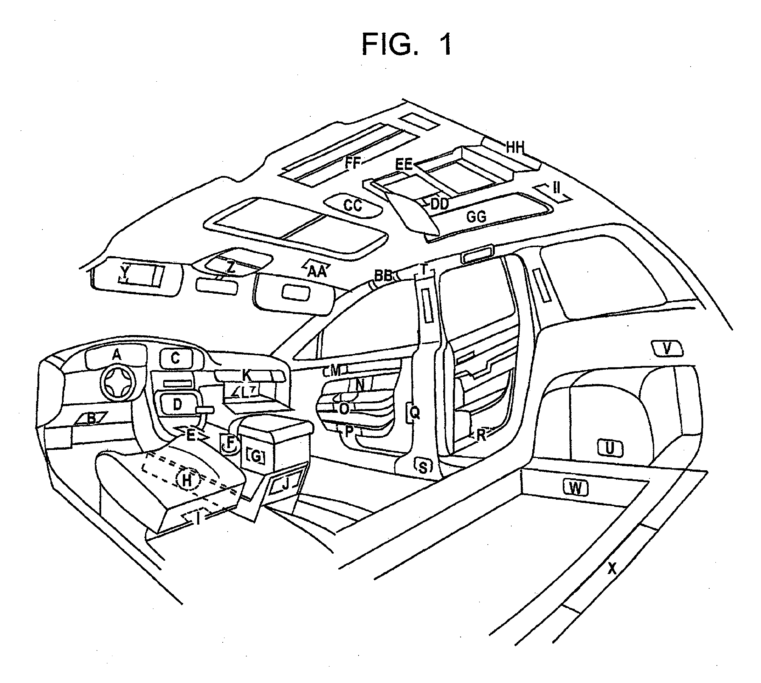

**FIG. 1** is a schematic view of the interior of a motor vehicle illustrating some of the many potential applications for lighted appliqués and trim panels. Each of the letter designations (A-II) indicates areas of the interior where lighting devices may be integrated into a trim component to increase the value and versatility of the vehicle. That lighting may further include such features as icons, logos, sensors and switches.

Reference letter **A** is an example of instrument cluster backlighting. **B** is an example of footwell lighting for the driver. **C** is an example of how lighting/controls/touch sensors may be integrated into the infotainment center of a vehicle. **D** is an example similar to **C** in the center console area of the vehicle. **E** illustrates where lighting may be integrated into the PRNDL - shifter area of a console. **F** illustrates where lighting may be integrated into a cupholder area of a center console. **G** illustrates where lighting may be integrated into the storage compartment of a center console. **H, I** and **J** illustrate additional lighting for foot wells adjacent the center console and for rear passengers under the front seat and rear of the center console, respectively. **K** represents lighting integrated into a decorative appliqué on the instrument panel. **L** illustrates where lighting may be integrated into the glove box.

Turning to door trim, **M** illustrates how lighting may be used to highlight the interior door handle. **N** represents a trim insert for the door panel, often covered with textile or a perforated cover material, which may be backlit to provide a level of ambient light to the interior. **O** represents lighting to a pull cup or grip pull handle area and **P** represents lighting in a storage pocket. **Q** represents light at a door edge to indicate to oncoming traffic that the door is open. **R** represents lighting for puddles and outside hazards when the door is open.

Turning to sidewall and storage areas in the vehicle, **S** represents lighting integrated into the pillar trim for lighting the foot well area of the second row of seating. **T** is a similar treatment applied to the top of the pillar post to provide light for assistance in entry/exit. **U, V** and W are examples of where lighting may be applied in the cargo storage area for functional lighting and to illuminate the viewing in dark or shadowed areas. **X** is a sill plate appliqué that may be applied to the sill of any opening to assist in loading/unloading under low lighting conditions and may serve as a decorative backlighting feature (logo, design, etc).

The overhead system of the vehicle represents numerous opportunities for lighting behind molded grilles, etc. **Y** is a vanity mirror applied to a visor with lighting and sensing capabilities. **Z** is a console with map reading lighting. **AA** is a variant for lighting the vanity mirror in the visor and may provide general ambient overhead lighting for the passenger. **BB** is lighting applied to the headliner to accentuate the grab handle. **CC** is an example of dome lighting with integral electronics for assisting in entry and general lighting in the vehicle. **DD** and **EE** are similar lighting integrated into the overhead console area. **FF** represents an overhead decorative appliqué with lighting capability. **GG** represents an overhead lighting panel having a textile outer layer which the lighting may be seen through. **HH** is a brake light formed according to the present disclosure. **II** is an overhead panel integrated into the roof portion of the rear storage area.

Appliqués and trim panels may be molded and equipped with lighting capability to project light through, around and along such panels to meet the requirements of many of the above listed applications, according to the present disclosure.

By "appliqué" it is understood to mean a molded panel having a plurality of layers, which may be used as a decorative panel to accentuate or highlight an area of a vehicle and enhance or differentiate the appearance of that area.

By "trim panel" it is understood to mean a molded panel having a plurality of layers, which may have sensing, switching and control functions integrated into the panel and accessible through the top layer.

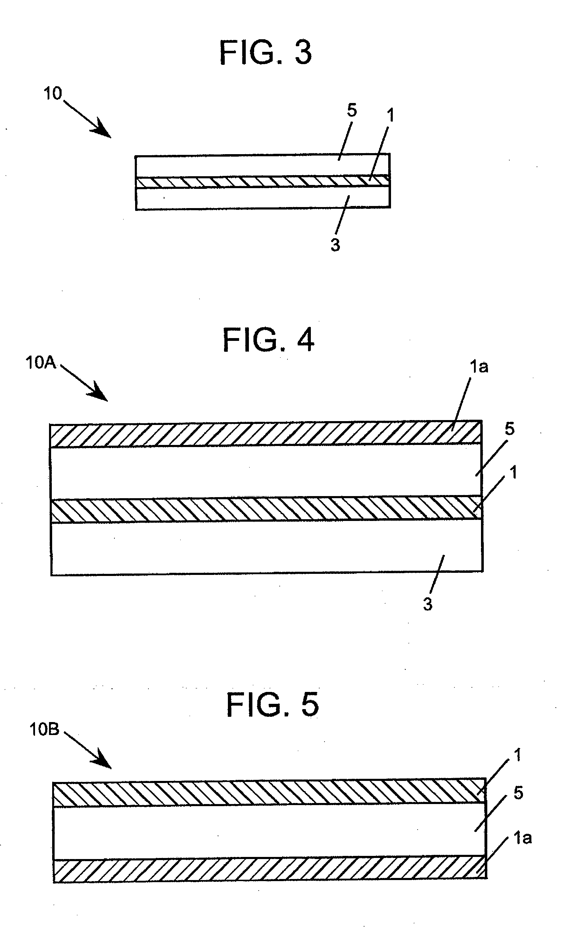

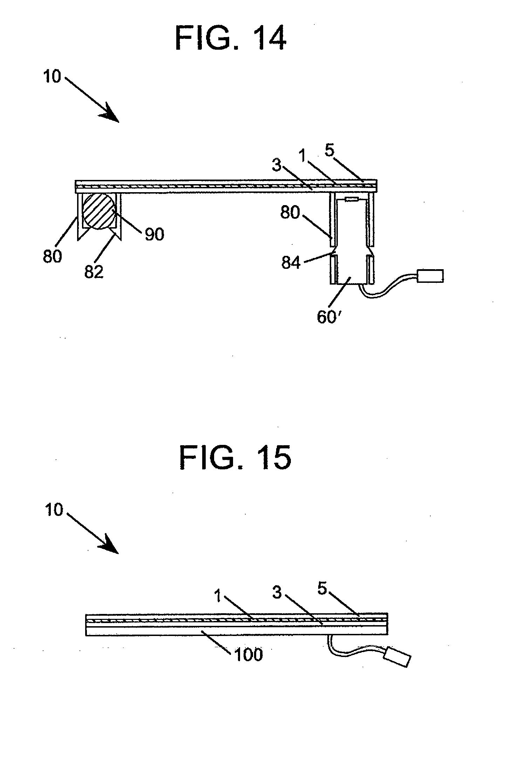

**FIG**. **2A** is a plan view of an exemplary appliqué **10** with a lighted periphery **20,** comprising a transparent outer layer **5** overlying a decorative layer **1** which is backed by another transparent plastic layer **3** (see **FIG. 3** for a cross-sectional view). The decorative layer **1** is a film or foil having a pattern of non-transparent facets **12** on the outer sides of which layers **3, 5** have been injection molded to form a laminate. The outer periphery **14** of the decorative layer **1** is transparent to allow a light source (not shown) to project light through portions of the laminate and provide halo lighting. This type of appliqué is shown, for instance, in **FIG. 1** as reference numerals **E, K, M, N, R and X.** **FIG. 14** illustrates two examples of how the periphery of the appliqué 10 may be backlighted.

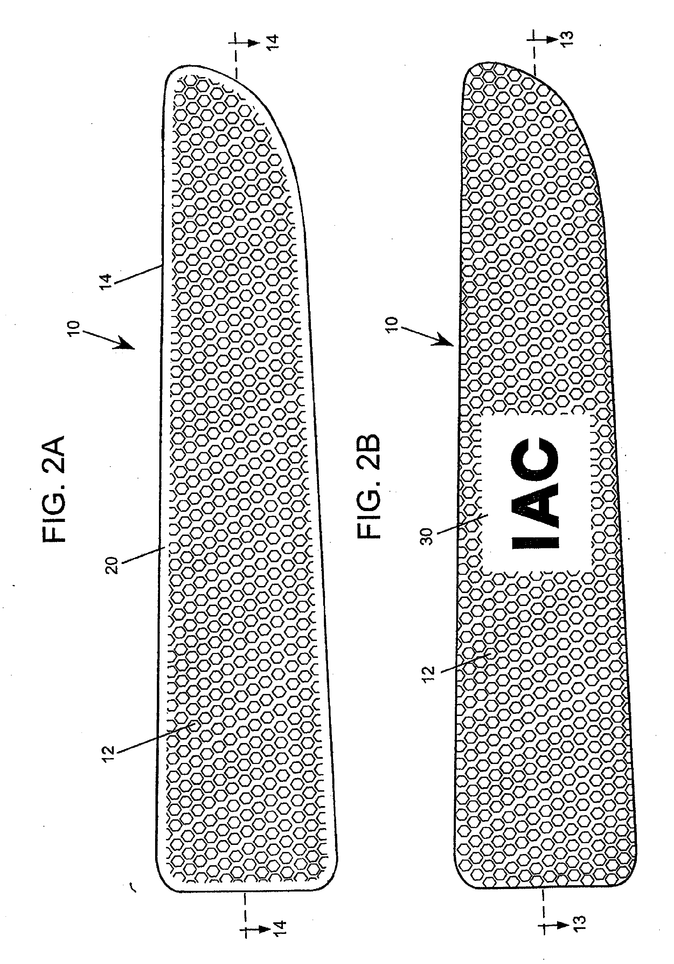

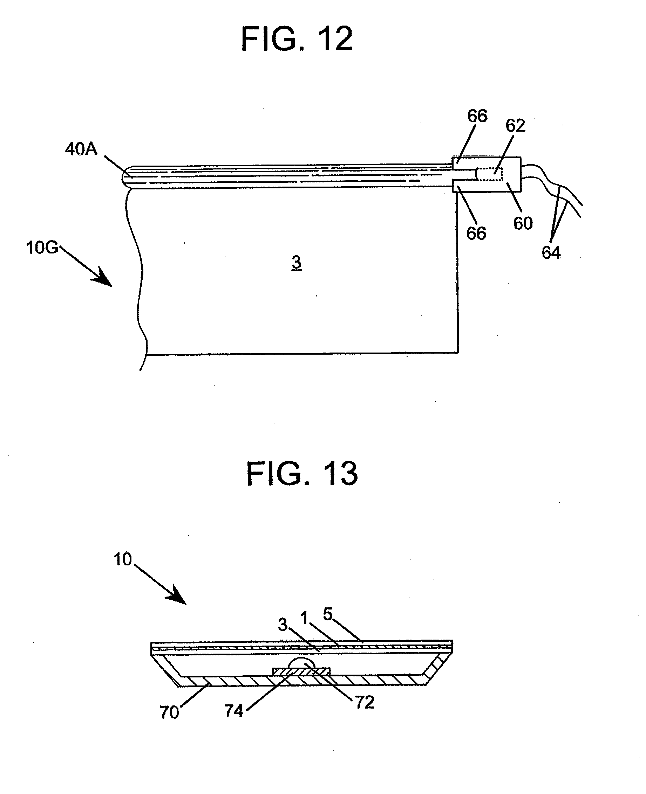

**FIG. 2B** is a plan view of an exemplary appliqué **10** with a lighted logo **30,** comprising a transparent outer layer **5** overlying a decorative layer **1** which may be backed by another transparent plastic layer **3** (see **FIG. 3** for a cross-sectional view). The decorative layer **1** may be a film or foil having a honeycombed hexagonal or conical pattern of projections **12** and which has been injection molded between layers **3, 5** to form a laminate. The logo area **30** may comprise a section which is transparent or light in color in the decorative layer to highlight the logo from the remainder of the colored opaque appliqué. **FIG. 13** illustrates one means for lighting the logo selectively from the backside.

An exemplary construction of the appliqué or trim panel of the present disclosure is shown in simplified cross-sectional view in **FIG. 3****.** The layers as shown are exaggerated in thickness for clarity of the discussion. The relative dimensions of the layers may not be as depicted.

Here, an appliqué **10** comprises a decorative layer **1** having a front side and a back side, which may include, but is not limited to, a foil, film, fabric, veneer, wood, paper, a coating or thin laminate which is covered with a layer **3** of a first plastic on its back side and has a top layer **5** overlying its front side. The top layer **5** is preferably injection molded of a transparent plastic at a thickness to provide the desired depth of image and to protect the thin decorative layer **1.** The backing layer **3** is also injection molded and may be of any plastic material and may be transparent or tinted, pigmented or otherwise decorated to enhance the appearance of the decorative layer **1,** if so desired. Likewise, the top layer **5** may be tinted, pigmented or otherwise decorated to yield a specific appearance as desired. As noted above, typical decorative materials may include, but, are not limited to, cloth or fabrics, metallized or painted films and foils, metal, wood grain veneers, paper, laminates formed by hydrographic or metal deposition processes, etc. The appliqué or trim panel may be formed according to the teachings of United States Application No. 11/428,107 filed June 30, 2006, which is a continuation of International Application No. PCT/US2005/000170 filed January 3, 2005 and published August 4, 2005 as International Publication No. WO 2005/070647, designating the United States, commonly assigned to the assignee of the present disclosure.

Particularly in the case of decorative layers which are somewhat porous, such as cloth, fabric, wood or wood based laminates, paper, etc., it may be desirable to modify the visual appearance of the exposed surface of the decorative material after the backing layer has been injected. This may be the case when the heat and pressure of the first injection of polymer as a backing layer may change the visual characteristics of the exposed surface of the decorative layer. This then may allow a change in color, gloss, texture, pattern, etc., to be imparted to the exposed surface of the decorative layer **1** and any exposed backing layer **3.** The procedure may also be used to provide a repair to the exposed surface of the decorative layer **1** for any defects that may have occurred during the injection of the backing layer **3.** This may particularly be an issue with wood laminates or veneers which may have an exposed surface which "opens up" or becomes more porous due to the heat and pressure of injection of the backing layer **3.** The same modifying/repair procedure may also be applied to the back surface of a decorative layer on which a transparent layer has been molded on the front surface. The appliqué or trim panel may be formed according to the teachings of United States Application No. 11/532,825 filed September 18, 2006, which is a continuation-in-part of United States Application No. 11/428,107, which are commonly assigned to the assignee of the present disclosure.

The preferably transparent outer layer **5** may comprise any of the transparent, preferably light stable, plastics available in the art, including but not limited to, polycarbonate, polymethyl-methacrylate, ethylene acrylate (EMA, EEA, EBA), thermoplastic urethane, polyester (PET, PEN), copolyester alloys, cyclic olefin copolymer, paly-4-methyl-1-pentene, polysulphone, allyl diglycol carbonate, allyl ester, styrene-acrylonitrile, methacrylate acrylanitrile-butadiene-styrene, polystyrene, polyamide, polyimide, polysulfone, cellulose acetate (CAB, CAP), glycol modified polyethylene terphthalate, polyvinyl chloride and blends thereof.

By "transparent" it is meant that the layer has the property of transmitting light through the layer with a low degree of diffusion or haze so that bodies lying beyond the layer may be seen relatively clearly. In some cases, 85% of the light may pass through the layer, including all values and increments in the range of 85% to 99.9%, in increments of 0.1%. Diffusion or haze may be understood as the scattering of light from within or from the surface of a layer.

Preferably, the transparent plastic outer layer **5** comprises a copolymer and more particularly a cyclic olefin copolymer, such as TOPAS® 6015S-04 from Ticona, or a copolyester alloy, such as OPTIMUM® 800 Grade from Engineered Plastics Corporation.

The appliqué **10** may be of any thickness suitable for the application for which the appliqué or trim panel is intended, typically in the range of about 1.0 mm. to about 5.0 mm. with a transparent outer layer **5** typically in the range of about 0.5 mm. to about 2.0 mm. in thickness, depending on the molding properties of the transparent resin used for the outer layer **5.**

In another exemplary embodiment, as illustrated in **FIGS. 4-5****,** multiple decorative layers **1, 1a** may be included in the construction of the appliqué to provide a distinguishing appearance. The layers as shown are exaggerated in thickness for clarity of the discussion. The relative dimensions of the layers may not be as depicted. The appliqué or trim panel may be formed according to the teachings of United States Application No. 12/352,487 filed January 12, 2009, which is a continuation-in-part of United States Application No. 11/532,825 filed September 18, 2006, which is a continuation-in-part of United States Application No. 11/428,107, which are commonly assigned to the assignee of the present disclosure.

One or more of the decorative layers **1, 1a** may include portions which are transparent allowing a colored or opaque backing layer or light to show through the layered construction. **FIG. 4** illustrates a combination of a first decorative layer **1** backed by an injection molded layer of colored or opaque plastic **3** forming a first decorative composite which may then be inserted into a second mold set in which a second decorative layer **1a** has been placed. Subsequently, a transparent plastic may be injected between the decorative layers **1**, **1a** to form a transparent layer **5** and a finished appliqué **10A**.

**FIG. 5** illustrates another process involving multiple decorative layers wherein a first decorative layer 1 and a second decorative layer **1a** may be placed into a mold set, and a transparent **resin 5** injected between the decorative layers to form an appliqué **10B.** In this example, the second decorative layer **1a** may be a bilaminate, such as manufactured by Avery Dennison Corporation comprising two carrier films, one of which has a pattern printed thereupon wherein the graphics lie between the films. The first decorative layer **1** may include at least some transparent portions, through which the graphics or light may be seen. The graphics, due to the relative thickness of the transparent layer **5,** may appear to be floating in the transparent layer, providing an exceptional depth of image. As a further feature of the invention, the appliqués formed and configured as described herein having portions which are transparent, may be provided with backlighting to further enhance their appearance. Further, portions of one or both of the decorative layers, **1, 1a** may include sections which are opaque and light blocking such that specific areas may show up as black when backlighted to indicate icons, logos, arrows, emblems, etc. It is contemplated that such light blocking areas may reside in a second decorative layer **1a** such that they are not visible (behind a pattern in layer **1)** and are seen only when the panel is backlighted.

Such icons, logos, arrows and emblems may overlie switches and controls for functions in the vehicle and indicate where pressure may be applied to actuate such switches and controls.

It may therefore be understood that the first and second decorative layers may be different in one or more of the following characteristics: type of decorative pattern, material (polymer type), color, areas of transparency relative to areas of opacity, thickness, hardness, strength (e.g. tensile strength). In addition, each decorative layer may itself be composed of several layers, each with graphics or printing thereon, to provide an overall decorative appearance.

As noted above, typical decorative materials may include, but, are not limited to, cloth or fabrics, metallized or painted films and foils, metal, wood grain veneers, paper, and laminates formed by hydrographic or metal deposition processes.

A coating may be applied to the exposed surface of any of the decorative layers **1, 1a** when the mold set is open to further decorate or enhance the appearance of the resultant appliqué **10A**, **10B.**

In addition, low pressure thermoplastic injection molding may be used to form the appliqué or trim component. Low pressure injection molding generally entails lower clamp pressure (for instance, at or below 13.789 MPa (2000 psi)) than regular injection molding processes due to one or more of the following characteristics: filling the mold while it is partially open (injection-compression), use of cascading sequential gating to distribute the flow, pre-expanding the melt, introducing a gas to fill out a short shot, low speed injection of the polymer, elimination of pack out and hold pressure, use of easy flow, relatively low melt viscosity polymers, and the use of relatively high melt index polymers (e.g. melt index values greater than 5, more preferably melt flow values in the range of 5-50, including all values therein, in 1.0 increments). Polymers which may be used to form the backing layer of the appliqué or trim panel using low pressure injection molding may include, for instance, polyethylene (PE), polypropylene (PP), acrylonitrile-butadiene-styrene (ABS), poly(vinyl chloride) (PVC), polyolefins, polycarbonate (PC) and blends thereof. Such low pressure molding may provide less disruption of the decorative layer, particularly if it is thin, upon injection of the polymer into the mold cavity.

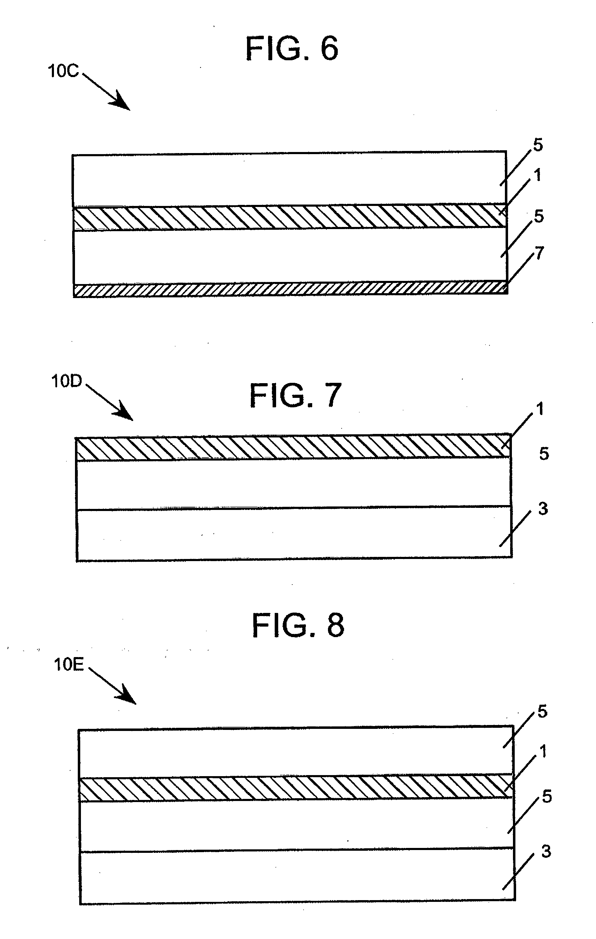

Additional appliqué constructions formed by multi-shot injection molding using the processes disclosed herein are illustrated in **FIGS. 6-8****.** The layers as shown are exaggerated in thickness for clarity of the discussion. The relative dimensions of the layers may not be as depicted.

**FIG. 6** is a cross-sectional view of an appliqué **10C** wherein a first decorative layer appears to be floating over a second decorative layer, in this case a coating of paint. Here, a first decorative layer **1** is molded with a transparent layer **5** on both the front side and back side, followed by coating one of the exposed surfaces of the transparent layer **5** with a colored paint 7.

**FIG. 7** is a cross-sectional view of an appliqué **10D** wherein a first decorative layer **1** is backed by an injection molded transparent **layer 5** which is in turn backed with an opaque or colored injection molded layer **3.** This construction provides a visual effect that whatever is printed on the decorative film may appear to be suspended deep within the transparent layer and on the surface of the opaque or colored layer. For instance, the colored layer may be white, and the graphics of the decorative layer may appear to be floating on the surface of the white substrate. The decorative film layer may have graphics printed on or within the layer as well as transparent areas which may allow one to see the colored layer or light through the film and transparent layer.

**FIG. 8** is a cross-sectional view of an appliqué **10E** wherein the paint layer **7** in **FIG. 6** is replaced with an injection molded colored backing layer **3** of **FIG. 7****.** The backing layer **3** may further include integral or insert-molded fastening means (not shown).

The decorative layer **1** for any of the embodiments shown in the figures may include portions which are transparent allowing light from a light source to show through the layered construction.

By "light source" it is understood to mean an artificial source of light that may be used in conjunction with a plastic panel to transmit light through a portion of that panel.

As used herein, "backlighted" or "backlit" it is understood to mean the providing of a source of light behind one or more layers or surfaces and the projecting of light through at least a portion of such layers so that the foreground appears sharper in contrast to the background. This may allow all or portions of a decorative layer to be enhanced or brightened in appearance.

"Optically coupled" as used herein refer to any connection, coupling, link or the like by which optical signals carried by one optical system element are imparted to the cating" or "coupled" element. Such "optically coupled" devices are not necessarily directly connected to one another and may be separated by intermediate optical components or devices. Likewise, the terms "connected" or "coupled" as used herein in regard to physical connections or couplings is a relative term and does not require a direct physical connection.

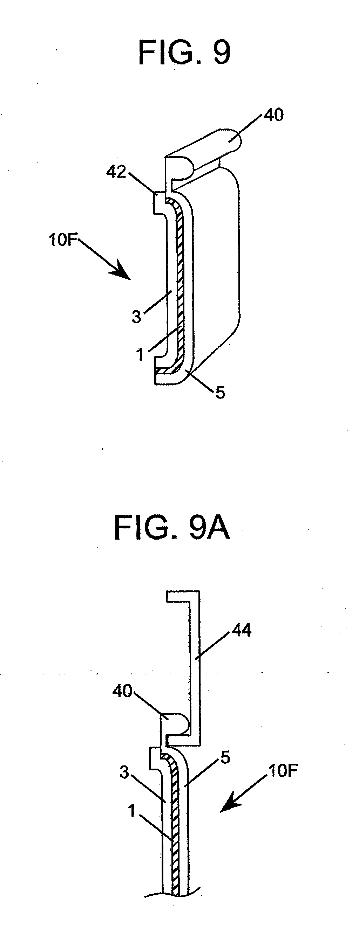

**FIG. 9** is a cross-section of a perspective view of an appliqué or trim panel according to another embodiment of the present disclosure, illustrating an integrally formed light pipe. While panels may be backlighted using a variety of light sources, including a light pipe, the present disclosure may allow "edge lighting" by utilizing the runner from the injection molding of the transparent outer layer 5 as a light pipe. When a polymer is injection molded, particularly to form a relatively thin cross-section such as the transparent layer of the present disclosure, for instance less than or equal to 2 mm, a somewhat larger runner may feed a relatively narrow gate to introduce the polymer preferably under laminar flow into the injection cavity.

For appliqués or panels having a relatively high length to width ratio, the runner may extend along one or both sides of and for nearly the entire length of the appliqué. Accordingly, in the context of the present invention, a runner is understood as an elongated section of plastic material, that serves to introduce plastic into a selected location in a mold for forming a plastic part (via laminar flow) which elongated section is also configured to remain permanently attached to the part and to convey light from a light source to all or a portion of the molded plastic part. In such regard, the runner is not a conventional runner in the sense that a conventional runner is typically designed to be removed and does not take into consideration light transmission requirements.

As shown in **FIG. 9****,** an appliqué or trim **panel 10F** may comprise a decorative layer **1,** backed by a backing layer **3** and having a transparent layer **5** molded onto the front side. A runner **40** usually of round or half-round cross-section, about 10-15 mm. in diameter may feed a gate **42** having an opening of about 1 mm. to allow the thickness of the transparent layer **5** to be filled out. Rather than trimming off the runner **40** after molding, since it is molded of the same transparent plastic as the transparent layer **5,** it may function as a light pipe by optically coupling a light source to one or both ends or along its length (see **FIG. 12**). As shown in schematic partial cross-sectional view in **FIG. 9A****,** the runner **40** may be covered by an adjacent trim panel **44** such that the runner or light pipe is not visible to the occupant in the vehicle and may provide a lighted layer (**5**) in the appliqué **10F**. It is contemplated that as shown in **FIG. 9****,** the decorative layer **1** may the removed, yet the runner **40** may still provide (with an appropriate light sourcé) illumination through the runner **40** and into all or a portion of the transparent layer **5**.

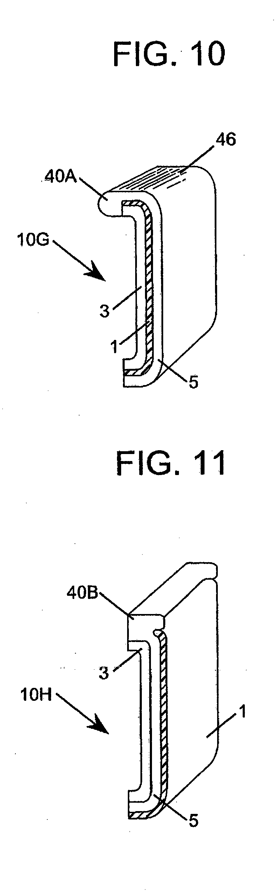

**FIG. 10** is a cross-section of a perspective view of the appliqué or trim panel of **FIG. 9****,** illustrating a different location for the integrated light pipe. In this case, the runner **40A** is molded behind the appliqué or trim panel **10G** by using retractable loose pieces in the mold that would be retracted after molding. Thus, the runner **40A** does not become part of the front surface of the appliqué. A roughened surface or molded-in pattern, for instance of sawtoothed or scalloped grooves, **46** may be provided along a portion of the runner **40A** to assist in directing the light from exiting the runner by Total Internal Reflection (TIR). Reflective strips may be locally applied or molded-in to further direct the light as desired.

**FIG. 11** is a cross-section of a perspective view of the appliqué or trim panel of **FIG. 9****,** illustrating an integrated light pipe **40B** formed from the runner in the molding process where the runner is left exposed as a decorative and functional part of the appliqué **10F**. This may provide a "halo-like" effect to a portion or all of the periphery of the appliqué in addition to lighting the transparent layer **5** of the appliqué. In this instance, the decorative layer **1** may overlie the transparent lighted layer **5** to aid in accentuating images, graphics, etc. in the decorative layer.

With any of the integrated runners which may form a light pipe in **FIGS. 9-11****,** it is contemplated that the appliqué or trim panel may not include a decorative layer but instead comprise an injection molded transparent layer over a colored backing layer and that such edge lighting may provide an enhanced appearance of the backing layer.

**FIG. 12** is a backside view of the appliqué or trim panel of **FIG. 10** illustrating one exemplary embodiment of the integration of a light source. In this view, the backing layer **3** of the appliqué **10G** is shown along with the clear runner or integrated light pipe **40A.** To supply light to the runner **40A,** a connector **60** is provided which may include a light source **62** such as a light emitting diode (LED) or other source of light which may be used to light a portion of the appliqué **10G.** The connector **60** may overlap a portion or all of the end of the runner **40A** and may include protrusions **66** which may be spaced apart by less than the diameter of the runner **40A** such that they may be spread slightly upon engaging the end of the runner and may grasp the runner to provide optical coupling of the light source **62** with the light pipe **40A.** Either or both of the protrusions **66** and the end of the runner **40A** may further include detents, ridges and tapered portions such that a mechanical coupling of the connector **60** and runner/integrated light pipe **40A** may be made. Wires **64** are shown which connect the light source to a power source. LED's may work well in such applications as they are relatively small in size and focused in intensity. The light source **62** may be contained within the connector **60** and include socket and reflector (not shown). An end of the light source will preferably be located closely adjacent to or in contact with the end of the runner/integrated light pipe **40A** so that light may be transported along the light pipe and/or across at least a portion of the surface of the appliqué **10G.**

**FIG. 13** is a cross-sectional view through the center of the appliqué of **FIG. 2B** illustrating an integration of a light source to selectively light a center area, such as a logo. Here, as shown in **FIG. 3****,** an appliqué **10** may comprise a decorative layer 1, such as cloth, wood, paper, a laminate, film or foil having at least one portion which is transparent to light and may include graphic patterns, logos, text, icons, etc. capable of being lighted from behind. **FIG.** 2B illustrates a logo which is selectively lighted from behind to distinguish the log from its surroundings. The appliqué **10** further comprises a transparent outer layer **5** and a backing layer **3** which may be at least selectively transparent to allow the light to be transmitted through transparent areas of the decorative layer **1** and the transparent outer layer **5.** The backing layer **3** may include areas that are opaque and may act as a blocking layer to prevent light transmission locally. A back panel **70** holds a printed circuit board or wiring panel **74** to which is connected a light source **74.** The light source may be of any type, for instance, incandescent, fluorescent, LED, electroluminescent, neon, argon, etc. A plurality of bulbs may be used to provide uniform lighting or to selectively light various areas of the appliqué **10.** In addition to individual bulbs, light pipes and light guides may also be used to provide light for various areas of the appliqué. Reflectors, diffusers, diverters and shields may also be configured within the back panel to provide types of special effects. Heat insulating elements as well as convection means for hot air may be useful.

**FIG. 14** is a cross-sectional view through the center of the appliqué of FIG. **2A** illustrating other exemplary embodiments of attachment of a light source to the appliqué **10.** As described in **FIG. 3****,** the basic construction of the appliqué **10** of **FIG. 2A** includes a decorative layer **1** having some transparent portions, an outer transparent layer **5** and a backing layer **3** which may also have transparent portions. The backing layer **3** may include mounting features **80** attached to the backside of the backing layer **3** which may accept various types of light sources for backlighting the periphery **20** of appliqué **10.** **FIG. 14** illustrates an acrylic light pipe **90** and an LED light module 60' either of which may be used to selectively light edge portions of the appliqué 10 by transmitting light through transparent portions of the backing layer **3,** decorative layer **1** and transparent outer layer **5.** Such light sources may also be positioned to light a center logo as shown in **FIG. 2****B.** The mounting features **80** and/or the light sources **90, 92** may further include detents **82,84,** ridges and tapered portions such that a mechanical coupling of the light sources **90, 92** and the mounting features **80** on the backside of the appliqué **10** may be made. Since the backing layer **3** may be injection molded behind the decorative layer 1, it may be preferable that the mounting features **80** be integrally molded with the backing layer.

**FIG. 15** is a cross-sectional view through the center of the appliqué of **FIG. 2B** illustrating another exemplary embodiment of attachment of a light source to the appliqué **10.** Here, an electroluminescent light film **100** may be adhesively attached, for instance, with a pressure sensitive adhesive (PSA) to the backside of the backing layer **3** of appliqué **10** and provide full area lighting or selective backlighting to the appliqué.

## Claims

1. An appliqué or trim panel having edges, comprising;
an outer layer (5), wherein said outer layer (5) comprises a transparent plastic;
wherein said outer layer (5) includes a runner integrally formed along one or more of said edges configured as a light pipe (40); and said light pipe (40) is optically coupled with at least one light source to illuminate at least a portion of said appliqué or trim panel; **characterized in that** the appliqué or trim panel comprises a plastic backing layer (3); the outer layer (5) being formed on said backing layer (3), wherein said runner is an elongated section of plastic material that serves to introduce plastic material into a selected location in a mold for forming the outer layer and the runner, which elongated section remains permanently attached to the outer layer.

2. The appliqué or trim panel of claim 1 wherein said runner is located substantially along said edge and is covered from view by an adjacent opaque trim panel.

3. The appliqué or trim panel of claim 1 wherein said runner is located substantially along said edge and forms a visible lighted edge.

4. The appliqué or trim panel of claim one of the preceding claims wherein said runner is located substantially behind said backing layer.

5. An appliqué or trim panel as defined in one of the preceding claims, comprising;
a decorative layer (1) having a top surface and a back surface and including one or more areas capable of transmitting light;
said plastic backing layer (3) formed on said back surface of said decorative layer (1), said backing layer (3) having a back surface and including areas capable of transmitting light;
said outer layer (5) formed on said top surface of said decorative layer (1), wherein said outer layer (5)comprises a transparent plastic; and
at least one light source located behind said plastic backing layer (3) which is capable of projecting light through said areas capable of transmitting light in said plastic backing layer (3), through said areas capable of transmitting light in said decorative layer (1) and through said transparent plastic outer layer (5) to illuminate at least a portion of said appliqué or trim panel.

6. The appliqué or trim panel of claim 5 wherein said decorative layer (1) comprises one of a film, a foil, a laminate, a veneer, a fabric, paper or a coating.

7. The appliqué or trim panel of claim 5 or 6 wherein a light blocking layer comprises a portion of said decorative layer (1) or said backing layer.

8. The appliqué or trim panel of one of the preceding claims wherein said transparent plastic comprises polycarbonate, poly(methyl methacrylate), thermoplastic urethane, polyester, copolyester alloy, cyclic olefin copolymer, poly-4-methyl-1-pentene, polysulphone, allyl diglycol carbonate, allyl ester, styrene-acrylonitrile, polystyrene, polyvinyl chloride and blends, alloys and combinations thereof.

9. The appliqué or trim panel of one of the preceding claims wherein one or more of said backing layer and said outer layer (5) include one or more pigments, tints, colored dyes, metallic flakes or light reflective particles therein.

10. The appliqué or trim panel of one of the preceding claims wherein said backing layer includes mounting features for said at least one light source and said features are integrally formed with said backing layer.

11. The appliqué or trim panel of one of the preceding claims wherein said at least one light source is an incandescent bulb, a fluorescent bulb, a light emitting diode (LED), in particular an organic light emitting diode (OLED), a light pipe, an electroluminescent light (EL) source, in particular an electroluminescent sheet, an a neon or argon bulb, fibre optics, or a combination thereof..

12. The appliqué or trim panel of one of the preceding claims wherein a second decorative layer (1) may overlie said transparent outer layer (5).

13. A method of producing an appliqué or trim panel having edges, comprising:
injection molding an outer layer (5) having a back surface and integrally forming a runner along one or more edges, wherein said outer layer (5) comprises a transparent plastic, and
wherein said runner is an elongated section of plastic material that serves to introduce plastic material into a selected location in a mold for forming the outer layer and the runner, which elongated section remains permanently attached to the outer layer;
injection molding a plastic backing layer (3) on said back surface of said outer layer (5) to form an appliqué or trim panel;
providing a light source;
optically coupling said light source to said runner such that said runner acts as a light pipe (40) to illuminate at least a portion of said appliqué or trim panel.

14. The method of claim 13, wherein said appliqué or trim panel has a thickness of less than or equal to about 5 mm.

15. The method of claim 13 or 14 further including positioning a decorative layer (1) between said backing layer and said outer layer (5).

16. The method of claim 15,
the decorative layer (1) has a top surface and a back surface and includes one or more areas capable of transmitting light;
said outer layer (5) is injection molded onto said top surface of said decorative layer (1); said backing layer has a back surface and including areas capable of transmitting light; and further comprising
providing at least one light source located behind said plastic backing layer (3) which is capable of projecting light through said plastic backing layer (3), through said areas capable of transmitting light of said decorative layer (1) and said transparent plastic outer layer (5) to illuminate at least a portion of said appliqué or trim panel.

17. The method of claim 15 or 16 wherein said decorative layer (1) includes opaque areas capable of blocking light and said opaque areas are only visible to an observer when the appliqué is lighted.

18. The method of one of claims 13 to 17 wherein said light source is attached to said back surface of said backing layer.

19. The method of one of claims 13 to 18 wherein said backing layer includes mounting features for said light source and said features are integrally formed with said backing layer by injection molding.

## Patentansprüche

1. Applikation oder Formteil mit Rändern, mit folgenden Merkmalen:
eine Außenschicht (5), wobei die Außenschicht (5) einen transparenten Kunststoff umfasst;
wobei die Außenschicht (5) einen Anguss aufweist, der entlang eines oder mehrerer der Ränder angeformt und als ein Lichtleiter (40) konfiguriert ist; und
wobei der Lichtleiter (40) mit wenigstens einer Lichtquelle optisch gekoppelt ist, um wenigstens ein Teil der Applikation oder des Formteils zu beleuchten;
**dadurch gekennzeichnet, dass** die Applikation oder das Formteil eine Kunststoff-Rückenschicht (3) aufweist, wobei die Außenschicht (5) auf der Rückenschicht (3) gebildet ist, wobei der Anguss ein länglicher Abschnitt aus Kunststoffmaterial ist, der dazu dient, Kunststoffmaterial in einen ausgewählten Bereich in einer Form zum Formen der Außenschicht (5) und des Angusses einzuführen, wobei der längliche Abschnitt mit der Außenschicht (5) permanent verbunden bleibt.

2. Applikation oder Formteil nach Anspruch 1, wobei der Anguss im Wesentlichen entlang eines Randes liegt und durch ein angrenzendes undurchsichtiges Formteil von der Sicht verdeckt wird.

3. Applikation oder Formteil nach Anspruch 1, wobei der Anguss im Wesentlichen entlang eines Randes angeordnet ist und einen sichtbaren beleuchteten Rand bildet.

4. Applikation oder Formteil nach einem der vorangehenden Ansprüche, wobei der Anguss im Wesentlichen hinter der Rückenschicht (3) liegt.

5. Applikation oder Formteil nach einem der vorangehenden Ansprüche, mit folgenden Merkmalen:
eine dekorative Schicht (1) mit einer Oberseite und einer Rückseite und mit einem oder mehreren Bereich(en), die Licht leiten können,
wobei die Kunststoff-Rückenschicht (3) auf der Rückseite der dekorativen Schicht (1) gebildet ist, wobei die Rückenschicht (3) eine Rückseite hat und Bereiche aufweist, die Licht leiten können;
wobei die Außenschicht (5) auf der Oberseite des dekorativen Schicht (1) gebildet ist, wobei die Außenschicht (5) einen transparenten Kunststoff aufweist; und
wenigstens eine Lichtquelle, die hinter der Kunststoff-Rückenschicht (3) liegt und Licht durch die Bereiche in der Kunststoff-Rückenschicht (3), die Licht leiten können,
durch die Bereiche in der dekorativen Schicht (1), die Licht leiten können, und durch die transparente äußere Kunststoffschicht (5) projizieren kann, um wenigstens einen Teil der Applikation oder des Formteils zu beleuchten.

6. Applikation oder Formteil nach Anspruch 5, wobei die dekorative Schicht (1) eines der folgenden umfasst: ein Film, eine Folie, ein Laminat, ein Furnier, ein Stoff, Papier oder eine Beschichtung.

7. Applikation oder Formteil nach Anspruch 5 oder 6, wobei eine lichtblockierende Schicht einen Teil der dekorativen Schicht (1) oder der Rückenschicht (3) umfasst.

8. Applikation oder Formteil nach einem der vorangehenden Ansprüche, wobei der transparente Kunststoff umfasst: Polycarbonat, Poly(methylmethacrylat), thermoplastisches Urethan, Polyester, Copolyesterlegierung, zyklisches Olefincopolymer, Poly-4-methyl-1-Penten, Polysulfon, Allyl Diglycol Carbonat, Allylester, Styren-Acrylnitril, Polystyren, Polyvinylchlorid und Mischungen, Legierungen und Kombinationen hiervon.

9. Applikation oder Formteil nach einem der vorangehenden Ansprüche, wobei eines oder mehrere der Rückenschicht (3) und der Außenschicht (5) eines oder mehrere der folgenden umfasst: Pigmente, Tönungen, gefärbte Farbstoffe, Metallflocken oder lichtreflektierende Partikel.

10. Applikation oder Formteil nach einem der vorangehenden Ansprüche, wobei die Rückenschicht (3) Montagemerkmale für die wenigstens eine Lichtquelle aufweist und diese Merkmale an der Rückenschicht (3) angeformt sind.

11. Applikation oder Formteil nach einem der vorangehenden Ansprüche, wobei die wenigstens eine Lichtquelle eine Glühbirne, eine Fluoreszenzbirne, eine lichtemittierende Diode (LED), insbesondere eine organische lichtemittierende Diode (OLED), einen Lichtleiter (40), eine Elektrolumineszenz-Lichtquelle (EL), insbesondere eine Elektrolumineszenz-Folie, eine Neon- oder Argonbirne, Lichtleitfasern oder Kombinationen hiervon umfasst.

12. Applikation oder Formteil nach einem der vorangehenden Ansprüche, wobei eine zweite dekorative Schicht (1) über der transparenten Schicht (5) liegen kann.

13. Verfahren zum Herstellen einer Applikation oder eines Formteils mit Rändern, mit den Verfahrensschritten:
Spritzgießen einer Außenschicht (5) mit einer Rückseite und einem angeformten Anguss entlang eines oder mehrerer Ränder, wobei die Außenschicht (5) transparenten Kunststoff umfasst, und
wobei der Anguss ein länglicher Abschnitt aus Kunststoffmaterial ist, der dazu dient,
Kunststoffmaterial in einen ausgewählten Bereich in der Form zum Formen der Außenschicht (5) und des Angusses einzuführen, wobei der längliche Abschnitt an der Außenschicht (5) permanent angebracht bleibt;
Spritzgießen einer Kunststoff-Rückenschicht (3) auf der Rückseite der Außenschicht 5) zum Ausbilden einer Applikation oder eines Formteils;
Vorsehen einer Lichtquelle;
optisches Koppeln der Lichtquelle mit dem Anguss, so dass der Anguss als Lichtleiter (40) dient, um wenigstens einen Teil der Applikation oder des Formteils zu beleuchten.

14. Verfahren nach Anspruch 13, wobei die Applikation oder das Formteil eine Dicke von weniger oder gleich ungefähr 5 mm hat.

15. Verfahren nach Anspruch 13 oder 14, mit dem weiteren Schritt des Positionierens einer dekorativen Schicht (1) zwischen der Rückenschicht (3) und der Außenschicht (5).

16. Verfahren nach Anspruch 15,
wobei die dekorative Schicht (1) eine Oberseite und eine Rückseite hat und einen oder mehrere Bereiche aufweist, die Licht durchlassen können;
und wobei die Außenschicht (5) auf die Oberseite der dekorativen Schicht (1) aufgespritzt ist,
wobei die Rückenschicht (3) eine Rückseite hat und Bereiche aufweist, die Licht hindurchlassen können; und
mit den weiteren Schritten:
Vorsehen wenigstens einer Lichtquelle, die hinter der Kunststoff-Rückenschicht (3) liegt, welche Licht durch die Kunststoff-Rückenschicht (3), durch die Bereiche der dekorativen Schicht (1), welche Licht hindurchlassen können, und durch die transparente Kunststoff-Außenschicht (5) projizieren kann, um wenigstens einen Teil der Applikation oder des Formteils zu beleuchten.

17. Verfahren nach Anspruch 15 oder 16, wobei die dekorative Schicht (1) lichtundurchlässige Bereich aufweist, die Licht blockieren können, und wobei die lichtundurchlässigen Bereiche nur dann für einen Betrachter sichtbar sind, wenn die Applikation beleuchtet wird.

18. Verfahren nach einem der Ansprüche 13 bis 17, wobei die Lichtquelle an der Rückseite der Rückenschicht (3) angebracht wird.

19. Verfahren nach einem der Ansprüche 13 bis 18, wobei die Rückenschicht (3) Montagemerkmale für die Lichtquelle aufweist und wobei die Merkmale an der Rückenschicht (3) durch Spritzgießen angeformt werden.

## Revendications

1. Applique ou panneau de finition ayant des bords, comprenant :
une couche externe (5), ladite couche externe (5) comprenant un plastique transparent ;
ladite couche externe (5) comprenant une glissière formée de façon intégrée le long d'un ou plusieurs desdits bords configurée sous la forme d'un conduit de lumière (40) ;
et ledit conduit de lumière (40) étant optiquement couplé à au moins une source de lumière pour illuminer au moins une partie de ladite applique ou dudit panneau de finition ; **caractérisé en ce que** l'applique ou le panneau de finition comprend une couche de support de plastique (3), la couche externe (5) étant formée sur ladite couche de support (3), ladite glissière étant une section allongée de matière plastique qui sert à introduire une matière plastique dans un emplacement sélectionné dans un moule pour former la couche externe et la glissière, ladite section allongée restant fixée de façon permanente à la couche externe.

2. Applique ou panneau de finition de la revendication 1 dans lequel ladite glissière est située sensiblement le long dudit bord et est masquée de toute visibilité par un panneau de finition opaque adjacent.

3. Applique ou panneau de finition de la revendication 1 dans lequel ladite glissière est située sensiblement le long dudit bord et forme un bord éclairé visible.

4. Applique ou panneau de finition de la revendication selon l'une des revendications précédentes dans lequel ladite glissière est située sensiblement derrière ladite couche de support.

5. Applique ou panneau de finition tel que défini dans l'une des revendications précédentes, comprenant ;
une couche décorative (1) ayant une surface supérieure et une surface arrière et comprenant une ou plusieurs zones capables de transmettre la lumière ;
ladite couche de support de plastique (3) formée sur ladite surface arrière de ladite couche décorative (1), ladite couche de support (3) ayant une surface arrière et comprenant des zones capables de transmettre la lumière ;
ladite couche externe (5) formée sur ladite surface supérieure de ladite couche décorative (1), ladite couche externe (5) comprenant un plastique transparent ; et
au moins une source de lumière située derrière ladite couche de support de plastique (3) qui est capable de projeter de la lumière à travers lesdites zones capables de transmettre la lumière dans ladite couche de support de plastique (3), à travers lesdites zones capables de transmettre la lumière dans ladite couche décorative (1) et à travers ladite couche externe de plastique transparente (5) pour illuminer au moins une partie de ladite applique ou dudit panneau de finition.

6. Applique ou panneau de finition de la revendication 5 dans lequel ladite couche décorative (1) comprend l'un d'un film, une feuille, un stratifié, un placage, un textile, du papier ou un revêtement.

7. Applique ou panneau de finition de la revendication 5 ou 6 dans lequel une couche de blocage de lumière comprend une partie de ladite couche décorative (1) ou ladite couche de support.

8. Applique ou panneau de finition d'une des revendications précédentes dans lequel ledit plastique transparent comprend le polycarbonate, le poly(méthacrylate de méthyle), l'uréthane thermoplastique, le polyester, un alliage de copolyester, un copolymère d'oléfine cyclique, un poly-4-méthyl-1-pentène, une polysulfone, le diglycolcarbonate d'allyle, un ester d'allyle, le styréne-acrylonitrile, le polystyrène, le poly(chlorure de vinyle) et des mélanges, alliages et combinaisons de ceux-ci.

9. Applique ou panneau de finition d'une des revendications précédentes dans lequel une ou plusieurs de ladite couche de support et ladite couche externe (5) comprennent un ou plusieurs pigments, teintures, colorants, paillettes métalliques ou particules réfléchissant la lumière dans celles-ci.

10. Applique ou panneau de finition d'une des revendications précédentes dans lequel ladite couche de support comprend des éléments de montage pour ladite au moins une source de lumière et lesdits éléments sont formés de façon intégrée avec ladite couche de support.

11. Applique ou panneau de finition d'une des revendications précédentes dans lequel ladite au moins une source de lumière est une ampoule incandescente, une ampoule fluorescente, une diode électroluminescente (LED), en particulier une diode électroluminescente organique (OLED), un conduit de lumière, une source de lumière électroluminescente (EL), en particulier une feuille électroluminescente, et une ampoule à néon ou argon, une fibre optique, ou une combinaison de ceux-ci.

12. Applique ou panneau de finition d'une des revendications précédentes dans lequel une deuxième couche décorative (1) peut recouvrir ladite couche externe transparente (5).

13. Procédé de production d'une applique ou un panneau de finition ayant des bords, comprenant :
le moulage par injection d'une couche externe (5) ayant une surface arrière et formant de façon intégrée une glissière le long d'un ou plusieurs bords, ladite couche externe (5) comprenant un plastique transparent, et ladite glissière étant une section allongée de matière plastique qui sert à introduire une matière plastique à un emplacement sélectionné dans un moule pour former la couche externe et la glissière, ladite section allongée restant fixée de façon permanente à la couche externe ;
le moulage par injection d'une couche de support de plastique (3) sur ladite surface arrière de ladite couche externe (5) pour former une applique ou un panneau de finition ;
le couplage optique de ladite source de lumière avec ladite glissière de sorte que ladite glissière agisse en tant que conduit de lumière (40) pour illuminer au moins une partie de ladite applique ou dudit panneau de finition.

14. Procédé de la revendication 13, dans lequel ladite applique ou ledit panneau de finition a une épaisseur inférieure ou égale à environ 5 mm.

15. Procédé de la revendication 13 ou 14 comprenant en outre le positionnement d'une couche décorative (1) entre ladite couche de support et ladite couche externe (5).

16. Procédé de la revendication 15, dans lequel
la couche décorative (1) a une surface supérieure et une surface arrière et comprend une ou plusieurs zones capables de transmettre la lumière ;
ladite couche externe (5) est moulée par injection sur ladite surface supérieure de ladite couche décorative (1) ;
ladite couche de support a une surface arrière et comprend des zones capables de transmettre la lumière ;
et comprenant en outre
la fourniture d'au moins une source de lumière située derrière ladite couche de support de plastique (3) qui est capable de projeter de la lumière à travers ladite couche de support de plastique (3), à travers lesdits zones capables de transmettre la lumière de ladite couche décorative (1) et ladite couche externe en plastique transparente (5) de manière à illuminer au moins une partie de ladite applique ou dudit panneau de finition.

17. Procédé de la revendication 15 ou 16 dans lequel ladite couche décorative (1) comprend des zones opaques capables de bloquer la lumière et lesdites zones opaques sont visibles par un observateur uniquement lorsque l'applique est éclairée.

18. Procédé d'une de revendications 13 à 17 dans lequel ladite source de lumière est fixée à ladite surface arrière de ladite couche de support.

19. Procédé d'une des revendications 13 à 18 dans lequel ladite couche de support comprend des éléments de montage pour ladite source de lumière et lesdits éléments sont formés de façon intégrée avec ladite couche de support par moulage par injection.
